# EUROPEAN PATENT APPLICATION

(11) **EP 2 169 446 A1**
(43) Date of publication of application: **31.03.2010**
(21) Application number: 08253115.3
(22) Date of filing: 24.09.2008
(51) Int. Cl.: G02C 1/02

(54) **Connecting device for a rimless spectacle**

(71) Applicant: Yuet-Charn Leung, N.T. Hong Kong (CN)
(72) Inventor: Yuet-Charn Leung, N.T. Hong Kong (CN)
(74) Representative: Hedley, Nicholas James Matthew

(57) **Abstract**

A connection device has a lens (10) and a connecting element (30). The lens (10) has a non-circular connecting hole (11) defined through the lens (10) near a side of the lens (10) and having a shape. The connecting element (30) may be a temple (31,31A) or a nose bridge (20) of a spectacle, is connected to the lens (10) and has a plug (33). The plug (33) is securely connected to and held in the connecting hole (11) in the lens (10) and has a non-circular cross section corresponding to the shape of the connecting hole (11). Accordingly, the plug (33) is easily assembled with the connecting hole (11) in the lens (10).

## Description

### 1. Field of the Invention

The present invention relates to a connection device, and more particularly to a connection device for a rimless spectacle.

### 2. Description of Related Art

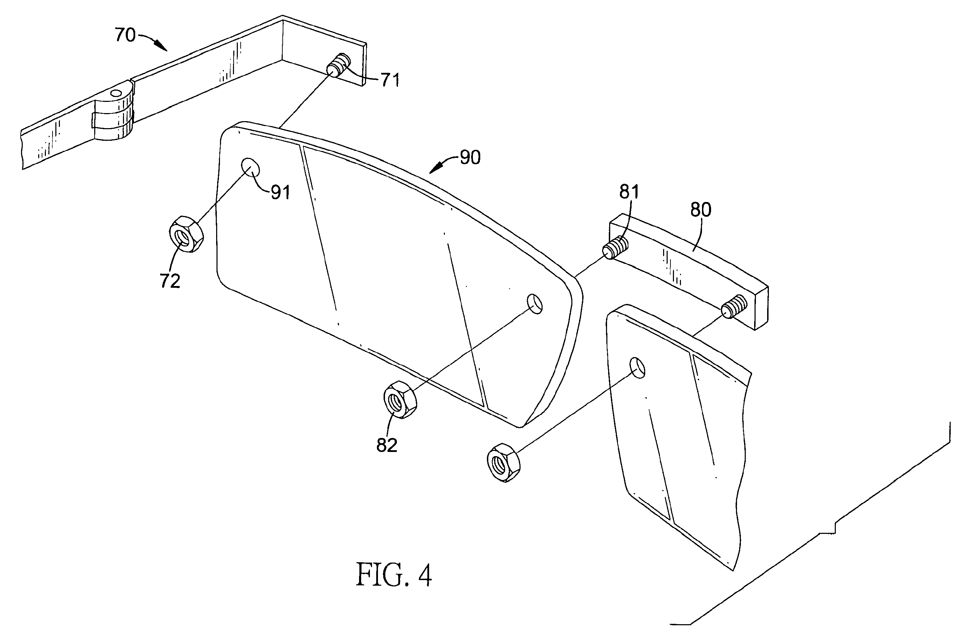

A rimless spectacle, as shown in Fig. 4, comprises two lenses (90), two temples (70), a nose bridge (80) and multiple connectors. Each lens (90) has two through holes (91) defined through the lens (90) respectively near two sides of the lens (90). The temples (70) and the nose bridge (80) are connected to the through holes (91) in the lenses (90) with the connectors. Each connector comprises a threaded rod (71,81) and a nut (72,82). The threaded rod (71,81) is securely attached to one of the temples (70) and nose bridge (80) and is mounted through a corresponding one of the through holes (91) in the lenses (90). The nut (72,82) is securely screwed with the threaded rod (71,81) and abuts against the lens (90) so as to securely connect the temple (70) or nose bridge (80) with the lens (90).

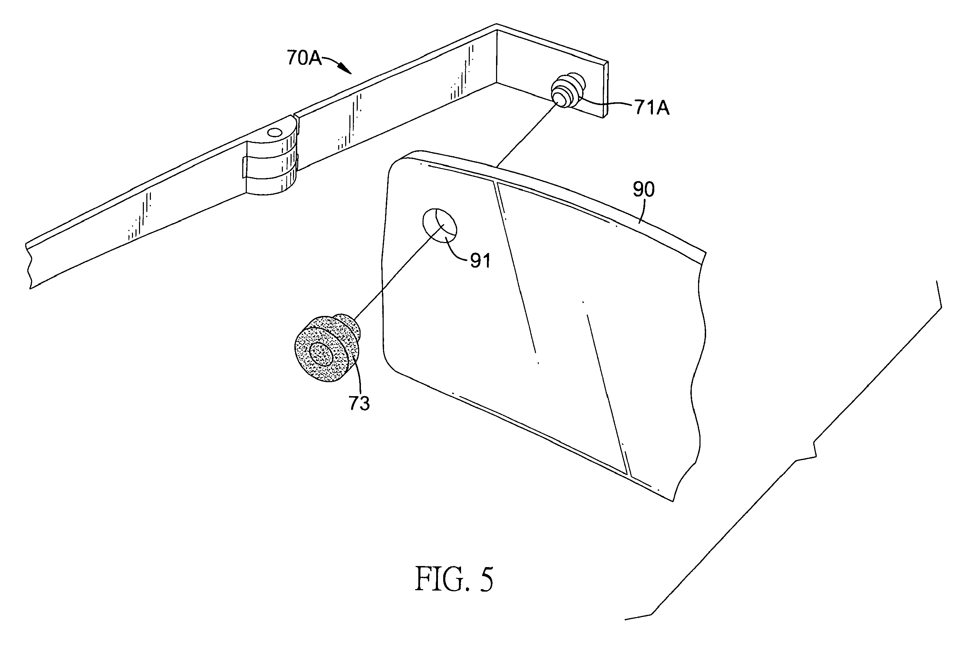

In an alternative embodiment as shown in Fig. 5, another conventional connector may comprise a resilient base (73) held in one of the through holes (91) and an inserting rod (71A) formed on one of the temples (70A) and the nose bridge and plugged into the resilient base (73). With the engagement between the inserting rod (71A) and the resilient base (73), the temples (70A) and nose bridge are connected securely with the lenses (90).

However, the conventional connectors shown in Figs. 4 and 5 cannot prevent the temples (70,70A) or nose bridge (80) from rotating relative to the lenses (90), the combination angle between the temples (70,70A) or nose bridge (80) with the lenses (90) easily changes.

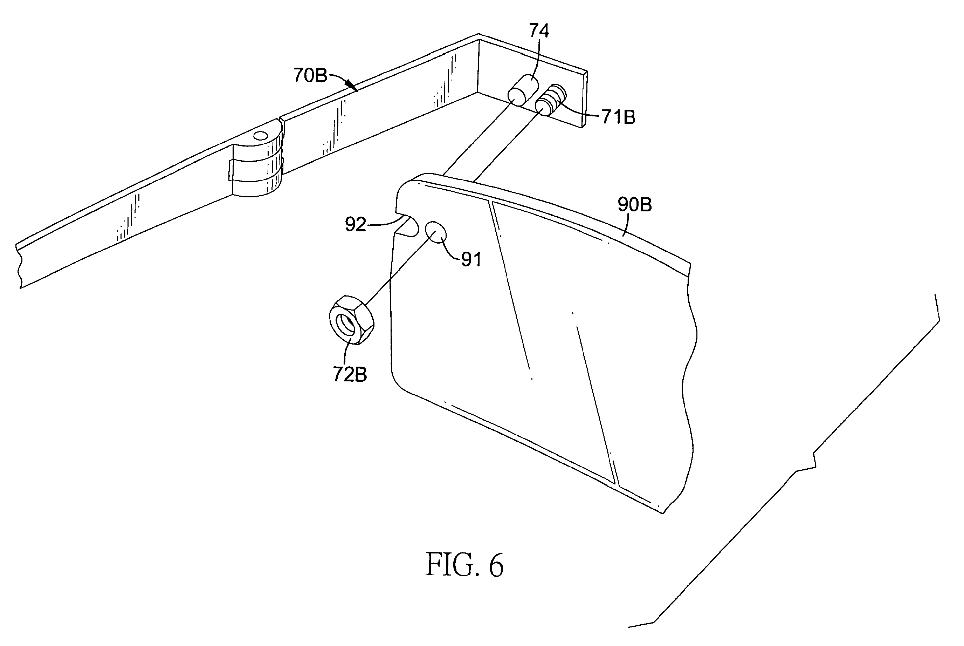

With reference to Fig. 6, another conventional connector is provided and comprises a threaded rod (71B), a nut (72B) and a positioning rod (74). With the arrangement of the positioning rod (74), the temples (70B) or nose bridge can be kept from rotating relative to the lens (90B), but a notch (92) should be formed in an edge of the lens (90B).

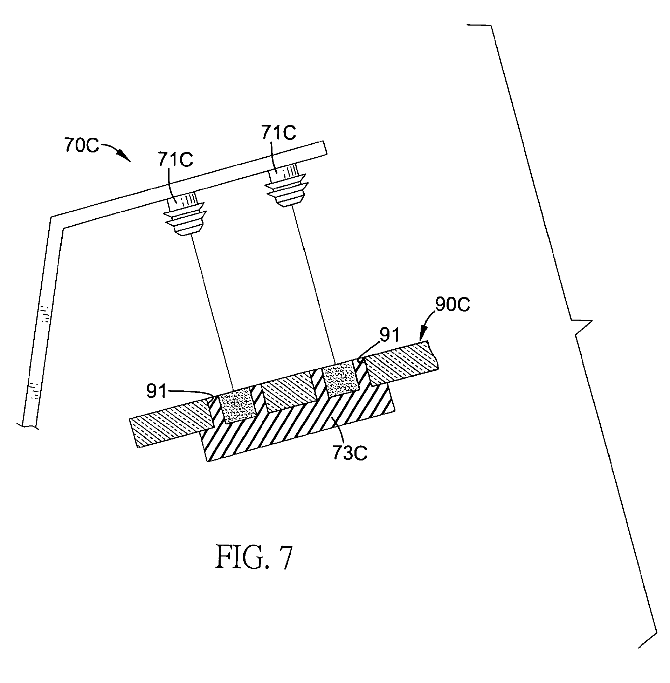

With reference to Fig. 7, an alternative embodiment of conventional connector may comprise two inserting rods (71 C) and a resilient connecting base (73C) with two holes engaging respectively the inserting rods (71C).

However, the conventional connectors shown in Figs. 6 and 7 have the following disadvantages.
1. Two through holes (91) or one through hole (91) with one notch (92) have to be formed in each side of the lens (90B,90C) for combining with the temple (70B,70C) or nose bridge, this takes a large space for defining the holes (91) or notch (92) in the lens (90B,90C).
2. The positions of the rods (71B,71C,74) have to be precisely aligned with the through holes (91) and notch (92), otherwise the temples (70B,70C) or nose bridge cannot be connected to the lens (90B,90C).

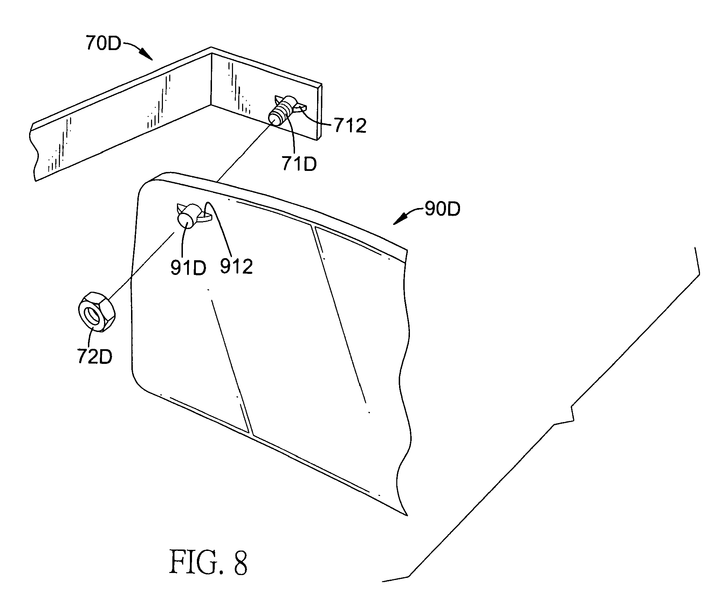

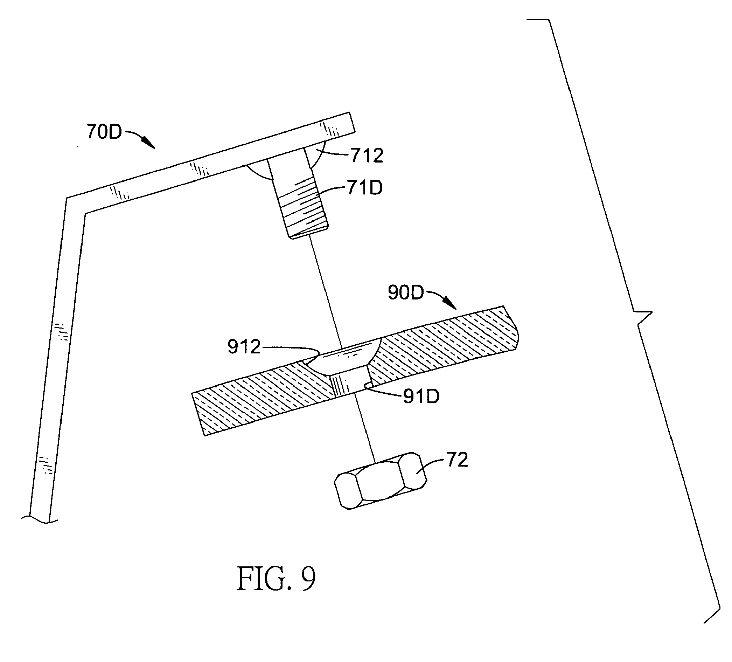

With reference to Figs. 8 and 9, a further conventional connector comprises a threaded rod (71D) and two positioning ribs (712) formed on two sides of the threaded rod (71D). A positioning groove (912) is defined in the lens (90) and communicates with the through hole (91) to correspond to the positioning ribs (712) on the threaded rod (71D). With the engagement between the positioning groove (912) and ribs (712), the temple (70D) or nose bridge can be kept from rotating relative to the lens (90D).

However, the conventional connector shown in Figs. 8 and 9 has the following shortcomings.
1. The height of the positioning ribs (712) and the depth of the positioning groove (912) should be large and deep enough, otherwise the engaging effect between the groove (912) and ribs (712) will lose. However, this will cause the volume of the lens (90D) enlarged.
2. The side and shape of the positioning groove (912) in the lens (90D) have to be precisely corresponding to that of the ribs (712), and this causes difficulty for manufacturing and assembling a spectacle.

To overcome the shortcomings, the present invention tends to provide a connecting device for a spectacle to mitigate or obviate the aforementioned problems.

The main objective of the invention is to provide a connection device for a rimless spectacle and that is easily assembled.

The connection device has a lens and a connecting element. The lens has a non-circular connecting hole defined through the lens near a side of the lens and having a shape. The connecting element is connected to the lens and has a plug securely connected to and held in the connecting hole in the lens and having a non-circular cross section corresponding to the shape of the connecting hole.

Other objects, advantages and novel features of the invention will become more apparent from the following detailed description when taken in conjunction with the accompanying drawings.

### IN THE DRAWINGS

Fig. 1 is an exploded perspective view of connecting devices for a spectacle in accordance with the present invention with a lens;
Fig. 2 is a perspective view of a forming tool for the connecting hole of the connecting device in Fig. 1;

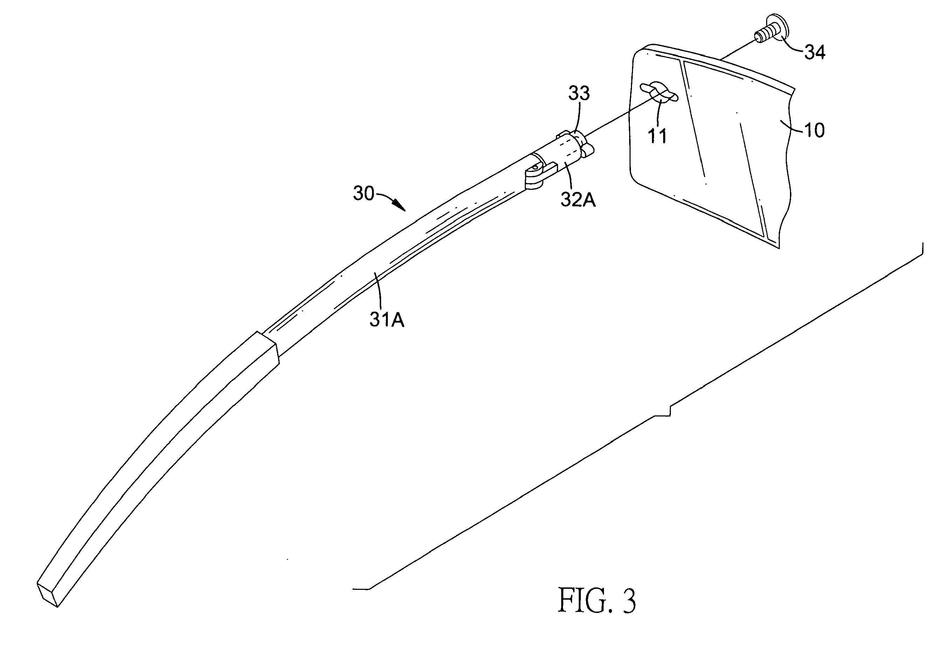

Fig. 3 is an exploded perspective view of another embodiment of a connecting device for a spectacle in accordance with the present invention;
Fig. 4 is an exploded perspective view of a spectacle with conventional connectors in accordance with the prior art;
Fig. 5 an exploded perspective view of a lens with another conventional connector in accordance with the prior art;
Fig. 6 an exploded perspective view of a lens with another conventional connector in accordance with the prior art;
Fig. 7 an exploded top view in partial section of a lens with another conventional connector in accordance with the prior art;
Fig. 8 an exploded perspective view of a lens with another conventional connector in accordance with the prior art; and
Fig. 9 an exploded top view in partial section of the lens with the conventional connector in Fig. 8.

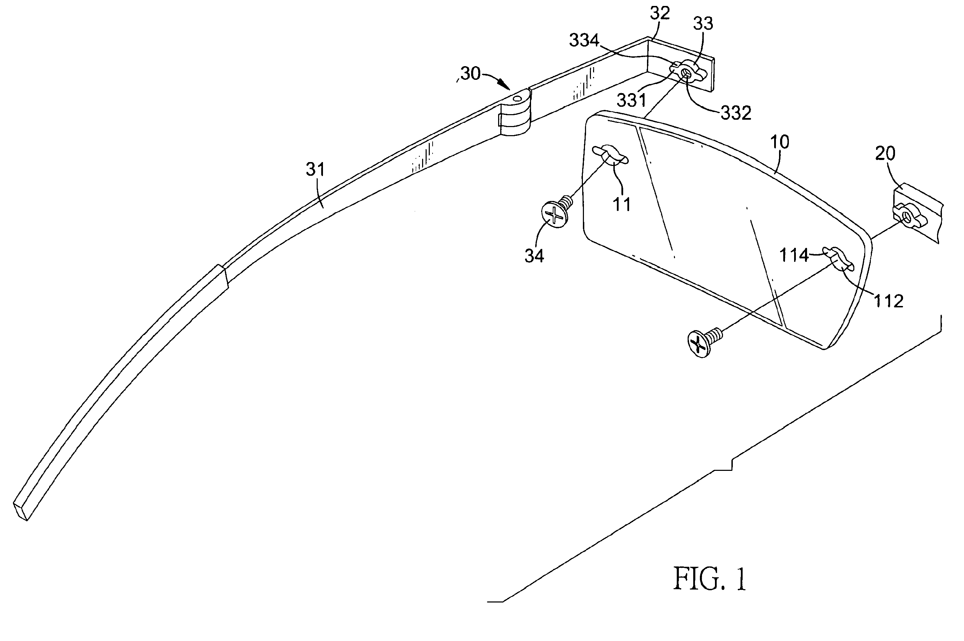

With reference to Fig. 1, a connection device for a rimless spectacle in accordance with the present invention comprises a lens (10) and a connecting element (30). The lens (10) has a non-circular connecting hole (11) defined through the lens (10) near a side of the lens (10) and having a shape. The connecting hole (11) may be triangular, square, rectangular, polygonal or key-shaped. In a preferred embodiment, the connecting hole (11) in the lens (10) comprises a round segment (112) and two cavities (114). The round segment (112) is defined through the lens (10) and has an inner edge and a diameter. The cavities (114) are formed in the inner edge of the round segment (112) respectively at two ends of the diameter of the round segment (112) to make the connecting hole (11) non-circular.

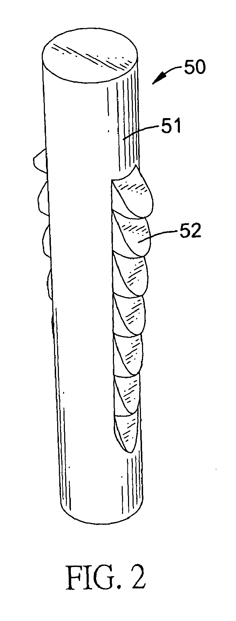

With further reference to Fig. 2, a forming tool (50) comprises a conical rod (51) and multiple pair of cutting teeth (52). The cutting teeth (52) are formed on the conical rod (51) in series and pairs and have different dimensions. To form a connecting hole (11) with two cavities (114) as shown in a lens (10), a round hole is firstly defined through the lens to form the round segment (112) of the connecting hole (11). The conical rod (51) is inserted into the round hole and is pushed by a press to cut off the inner edge of the round hole to define the cavities (114) with the cutting teeth (52). Accordingly, the connecting hole (11) can be easily and conveniently defined in the lens (10) with the forming tool (50).

The connecting element (30) is connected to the lens (10) and has a plug (33) securely connected to and held in the connecting hole (11) in the lens (10). The connecting element (30) may be a nose bridge (20) or a temple (31) of a spectacle. The plug (33) has a non-circular cross section corresponding to the shape of the connecting hole (11). In the preferred embodiment, the plug (33) of the connecting element (30) has two ears (331) formed on the plug (33) respectively corresponding to and held in the cavities (114) of the connecting hole (11) in the lens (10). The plug (33) of the connecting element (30) may further have a threaded hole (332) defined in a free end of the plug (33). A bolt (34) is screwed into the threaded hole (332) in the plug (33) and has a head abutting with the lens (10).

In a preferable embodiment, the connecting hole (11) has a dimension slightly smaller than that of the plug (33), each side of the connecting hole (11) is smaller than a corresponding side of the plug (33) in 0.05 millimeter (mm). The plug (33) and ears (331) can be sharpened at edges (334) to allow the plug (33) with the ears (331) to being inserted into the connecting hole (11). With the connecting hole (11) being slightly smaller than the plug (33), the plug (33) can be forced to press into and securely held in the connecting hole (11). With the non-circular shape of the connecting hole (11), the connecting element (30) with the plug (33) can be kept from rotating relative to the lens (10). Additionally, the bolt (34) can provide a further securing effect to the connecting device.

In the first embodiment as shown in Fig. 1, the plug (33) is formed on a bent portion of a hinge (32) of the temple (31), and the bent portion of the hinge (32) is substantially parallel with the lens (10).

In a second embodiment as shown in Fig. 1, the plug (33) is formed on a free end of a hinge (32A) of the temple (31A), and the hinge (32A) is substantially perpendicular to the lens (10).

In addition, the length of the plug (33) can be equal to or smaller than the depth of the connecting hole (11) in the lens (10) to make the plug (33) fitting with different lens having different thicknesses.

To assemble the plug (33) with the connecting hole (11), a guiding device with a threaded rod is firstly inserted through the round segment (112) of the connecting hole (11) and is screwed into the threaded hole (332) in the plug (33). With the rotation of the guiding device, the plug (33) is pulled and inserted into the connecting hole (11). When the plug (33) being pulled into the connecting hole (11), the sharpened edges (334) of the plug (33) with the ears (331) can cut off the inner edge of the connecting hole (11) automatically to make the plug (33) with the ears (331) securely held in the connecting hole (11). With the secure abutment and engagement of the outer surface of the plug (33) and the inner surface of the connecting hole (11), the plug (33) is securely held in and connecting with the connecting hole (11) without the bolt (34).

## Claims

1. A connection device for a rimless spectacle, **characterized in that** the connection device comprises:
a lens (10) having a non-circular connecting hole (11) defined through the lens (10) near a side of the lens (10) and having a shape; and
a connecting element (30) connected to the lens (10) and having a plug (33) securely connected to and held in the connecting hole (11) in the lens (10) and having a non-circular cross section corresponding to the shape of the connecting hole (11).

2. The connection device as claimed in claim 1, wherein the connecting hole (11) in the lens (10) has
a round segment (112) having an inner edge and a diameter; and
two cavities (114) formed in the inner edge of the round segment (112) respectively at two ends of the diameter of the round segment (112).

3. The connection device as claimed in claim 2, wherein the plug (33) of the connecting element (30) further has two ears (331) formed on the plug (33) respectively corresponding to and held in the cavities (114) of the connecting hole (11) in the lens (10).

4. The connection device as claimed in claim 1, 2 or 3, wherein the plug (33) of the connecting element (30) further has a threaded hole (332) defined in a free end of the plug (33); and
a bolt (34) is screwed into the threaded hole (332) in the plug (33).

5. The connection device as claimed in claim 1 or 4, wherein the connecting element (30) is a nose bridge (20) of a spectacle.

6. The connection device as claimed in claim 1 or 4, wherein the connecting element (30) is a temple (31,31A) of a spectacle.
